# EUROPEAN PATENT SPECIFICATION

(11) **EP 2 605 550 B1**
(45) Date of publication and mention of the grant of the patent: **06.05.2015**
(21) Application number: 11816020.9
(22) Date of filing: 24.03.2011
(51) Int. Cl.: H04W 4/06, H04W 24/08, H04W 4/20, H04W 72/04, H04W 24/04, H04W 72/00

(54) **METHOD AND SYSTEM FOR COLLECTING STATISTICS ON USER EQUIPMENT INFORMATION STATISTICS IN MULTIMEDIA BROADCAST MULTICAST SERVICE**
VERFAHREN UND SYSTEM ZUM SAMMELN VON BENUTZERGERÄTESTATISTIKEN IN EINEM MULTIMEDIA-BROADCAST-MULTICAST-SERVICE
PROCÉDÉ ET SYSTÈME ADAPTÉS POUR COLLECTER DES STATISTIQUES EN RAPPORT AVEC DES INFORMATIONS SUR UN ÉQUIPEMENT D'UTILISATEUR DANS UN SERVICE DE TRANSMISSION DE DONNÉES MULTIMÉDIAS EN DIFFUSION/MULTIDIFFUSION

(30) Priority: 12.08.2010 CN 201010254987
(43) Date of publication of application: 19.06.2013
(73) Proprietor: ZTE Corporation, Shenzhen, Guangdong 518057 (CN)
(72) Inventor: XU, Hui, Shenzhen Guangdong 518057 (CN); MA, Zijiang, Shenzhen Guangdong 518057 (CN); WANG, Yaying, Shenzhen Guangdong 518057 (CN)
(74) Representative: Quinterno, Giuseppe
(86) International application number: PCT/CN2011/072095
(87) International publication number: WO 2012/019461

(56) References cited:
- WO-A1-2008/135934
- WO-A2-2008/155741
- CN-A- 1 798 063
- CN-A- 101 064 622
- CN-A- 101 247 542
- CN-A- 101 374 252
- US-A1- 2004 224 698
- US-A1- 2005 129 058

## Description

### Technical Field

The present invention relates to a feedback technology of a User Equipment (UE) in a Multimedia Broadcast Multicast Service (MBMS) system, in particular to a method and a system for collecting statistics of UE information in an MBMS.

### Background

In order to effectively utilize mobile network resources, a 3rd Generation Partnership Project (3GPP) proposes an MBMS service. As a technology of transmitting data to a plurality of target mobile terminals from one data source, the MBMS service realizes share of network (comprising a core network and an access network) resources, and improves a utilization ratio of the network resources, particularly, air interface resources.

In a Long Term Evolution (LTE) system, when a UE is notified that a certain MBMS service is going to change (these changes can be a session start, a service bearer update or a session stop or the like), Downlink Control Information (DCI) and an MBMS-Radio Network Temporary Identifier (M-RNTI) can be sent on a Physical Downlink Control Channel (PDCCH) first, and then, the UE further reads a specific MBMS point-to-multipoint Control Channel (MCCH) message according to related information in the DCI, this is called MCCH notification mechanism. Specific service configuration parameters, such as a service ID, a Radio Link Control (RLC) parameter of a service, a Media Access Control (MAC) parameter and a physical layer configuration parameter and the like, will be sent on the MCCH.

In the LTE system, there are two bearing modes for the MBMS: a broadcast mode and an enhanced broadcast mode. As a multicast mode is not provided, a network side is unable to know which MBMS services the UE receives or is interested in receiving. As a mode between the broadcast mode and the multicast mode, the enhanced broadcast mode absorbs advantages of the simple flow in broadcast and advantages of optimized resources in multicast. In a case that the enhanced broadcast mode of the MBMS is used for bearing, it only needs to implement a join/leave process in an application layer to realize a registration/cancellation from the UE to a Broadcast Multicast-Service Center (BM-SC), no signaling interaction and information storage are needed in a bearing network layer. The enhanced broadcast is an optimization and extension of the broadcast, for example, in the access network, in a case of the enhanced broadcast, data will not be sent to a cell under which there is no UE accessed. For the MBMS service under the enhanced broadcast mode, during the configuration of a System Frame Number (SFN) and the allocation of resources, the status and number of UEs receiving the MBMS service are required to be considered, and this needs the UEs that receive or are interested in receiving the MBMS service to feed back information, it is called an uplink feedback of the MBMS. For a 3GPP Rel-10 MBMS, in order to activate/deactivate a Multicast Broadcast Single Frequency Network (MBSFN) transmission mode, the network side needs to obtain reception status information of the UEs, for example, information about the number of the UEs that are receiving a specific MBMS service.

In order to enable the network side to obtain the number of users with requirements on the MBMS service in each cell, a counting process is introduced in the MBMS system. The counting process is a process in which the network side initiates to count the number of users that receive or are interested in receiving a certain MBMS service when one MBMS session starts or during the session (also called recounting), so as to confirm whether to employ the MBSFN transmission mode. When the network side prepares to initiate a counting/recounting process, an ID and an access probability of the MBMS service are added in access information (access info) of the MCCH. The access probability is used because not all users are needed to establish a connection for feedback, as long as the number of feedbacks reaches a threshold; otherwise uplink congestion may be caused in a case that there are many users in an idle status.

In a conventional technology, the 3GPP Rel-10 MBMS needs a method for controlling the activation or deactivation of the MBSFN transmission mode. The method is to be based on statistics of UE information performed by the network side; however, there is no specific solution at present about how to collect statistics of the UE information by the network side. US 2005/129058 provides respective technical solutions; however, the above mentioned problem still remain unsolved.

### Summary

In view of the above, the present invention provides a method, according to claim 1, and a system, according to claim 9, for collecting statistics of UE information in an MBMS, so as to realize the statistics of the UE information performed by the network side, reduce a load of uplink resources, and save the uplink resources.

The technical solution of the present invention is implemented as follows.

The present invention provides a method for collecting statistics of UE information in an MBMS, and the method comprises:
a UE sending a dedicated Radio Resource Control (RRC) signaling carrying feedback information to a network side when a trigger condition is satisfied;
the network side collecting statistics of UE information according to the feedback information in the dedicated RRC signaling, and sending, when the collected statistics of the UE information satisfy a requirement, a feedback stop indicator to the UE; and
the UE stopping sending the feedback information after receiving the feedback stop indicator.
In the above solution, the trigger condition comprises: a trigger by the network side and/or an active trigger by the UE, wherein
the trigger by the network side is that: the network side sends a feedback request to trigger a feedback;
the active trigger by the UE is that: a feedback cycle is set and the feedback is triggered when the feedback time arrives; or, a trigger event is set and the feedback is triggered when the trigger event occurs.

In the above solution, the dedicated RRC signaling carrying the feedback information comprises a new RRC signaling which is created according to an RRC rule and is used to carry the feedback information dedicatedly.

In the above solution, the feedback information comprises a service identification (ID), and at least one of the following: a UE status and an area ID; wherein
the UE status comprises at least one of the following: interested in receiving, not interested in receiving, start to receive, stop receiving, receiving bearer change, cell update and cell handover;
the area ID comprises: a Multicast Broadcast Single Frequency Network (MBSFN) area ID, or a notification indicator;
the service ID comprises: a Temporary Mobile Group Identity (TMGI), and/or an MBMS service ID, and/or a Physical Multicast Channel (PMCH) ID, and/or a Logic Channel Identification (LCID), and/or a session ID, and/or a service list index, and/or a service guidance ID.

In the above solution, the feedback stop indicator is implemented by creating a new RRC signaling, or using an existing RRC signaling, to carry an identifier indicating the UE to stop sending the dedicated RRC signaling carrying the feedback information.

In the above solution, the existing RRC signaling comprises at least one of the following: an RRC connection setup message, an RRC connection reconfiguration message, an RRC connection re-establishment message, an RRC connection re-establishment rejection message, an RRC connection release message, an RRC connection rejection message, an MBMS point-to-multipoint Control CHannel (MCCH) message, and a System Information Block 13 (SIB13) message.

In the above solution, the step of the UE sending the dedicated RRC signaling carrying the feedback information to the network side comprises:
if a UE status does not change within one feedback cycle and a feedback request is received only once, the UE sending the dedicated RRC signaling carrying the feedback information once;
if the UE status changes within one feedback cycle or the feedback request is received more than once, the UE sending the dedicated RRC signaling carrying the feedback information each time the UE status changes or each time the UE receives the feedback request.

In the above solution, a change of a UE reception status comprises at least one of the following: a change from not interested in receiving to interested in receiving, a change from interested in receiving to not interested in receiving, a change from not receive to start to receive, a change from receiving to stop receiving, and a change in a receiving bearer.

The present invention provides a system for collecting statistics of User Equipment (UE) information in a Multimedia Broadcast Multicast Service (MBMS), comprising: a UE and a network side; wherein
the UE is configured to send a dedicated Radio Resource Control (RRC) signaling carrying feedback information to the network side according to a trigger condition, and stop sending the dedicated RRC signaling carrying the feedback information after receiving a feedback stop indicator sent by the network side;
the network side is configured to receive the dedicated RRC signaling sent by the UE, collect statistics of UE information according to the feedback information in the dedicated RRC signaling, and send, when the collected statistics of the UE information satisfy a requirement, the feedback stop indicator to the UE.

In the above solution, the UE comprises a trigger unit, a feedback unit and a stop unit, wherein
the trigger unit is configured to trigger the feedback unit according to the trigger condition;
the feedback unit is configured to send the dedicated RRC signaling carrying the feedback information to the network side;
the stop unit is configured to notify, after receiving the feedback stop indicator from the network side, the feedback unit to stop sending the dedicated RRC signaling carrying the feedback information;
the network side comprises: a statistics collection unit and a signaling sending unit, wherein
the statistics collection unit is configured to receive the dedicated RRC signaling sent by the UE, collect the statistics according to the feedback information in the dedicated RRC signaling, and notify the signaling sending unit when the collected statistics of the UE information satisfy the requirement;
the signaling sending unit is configured to send the feedback stop indicator to the UE.

In the above solution, when the trigger condition is that the network side sends a feedback request to trigger a feedback, the network side further comprises a feedback request unit configured to send the feedback request to the UE;
correspondingly, the trigger unit is further configured to receive the feedback request sent by the network side.

In the above solution, the statistics collection unit is specifically configured to count the number of UEs in different statuses currently in each service according to a UE status, an area identification (ID) and a service ID included in the feedback information in the dedicated RRC signaling.

In the above solution, the trigger unit is further configured to trigger the feedback unit when detecting that a UE status of the UE, in which the trigger unit is located, changes.

The present invention provides a receiving unit for use in a Multimedia Broadcast Multicast Service (MBMS) system, wherein the receiving unit comprises:
means for receiving a feedback request and/or a feedback stop indicator; and
means for sending a dedicated Radio Resource Control (RRC) signaling carrying feedback information to a transmitting unit.

In the above solution, the receiving unit is a User Equipment (UE).

According to the method and system for collecting statistics of UE information in an MBMS in the present invention, a UE sends a dedicated RRC signaling carrying feedback information to a network side when a trigger condition is satisfied; the network side collects statistics of UE information according to the feedback information in the dedicated RRC signaling, and sends, when the collected statistics of the UE information satisfy a requirement, a feedback stop indicator to the UE; the UE stops sending the feedback information after receiving the feedback stop indicator. In this way, the statistics of the UE information can be collected by the network side, and the requirements for activating or deactivating the MBSFN transmission mode of the MBMS service by the network side can be met. In accordance with the method, the network side can instruct the UE to stop feeding back with full consideration of a load of uplink resources, so that the load of the uplink resources can be reduced, and the uplink resources can be saved.

### Brief Description of the Drawings

Fig. 1 is a flow diagram of a method for collecting statistics of UE information in an MBMS in an embodiment of the present invention;
Fig. 2 is a structure diagram of a system for collecting statistics of UE information in an MBMS in an embodiment of the present invention.

### Detailed Description of the Embodiments

A basic principle of the embodiments of the present invention comprises that: a UE sends a dedicated RRC signaling carrying feedback information to a network side when a trigger condition is satisfied; the network side collects statistics of UE information according to the feedback information in the dedicated RRC signaling, and sends, when the collected statistics of the UE information satisfy a requirement, a feedback stop indicator to the UE; the UE stops sending the feedback information after receiving the feedback stop indicator; and the network side adjusts a service transmission mode according to a result of the statistics.

In the above, the trigger condition can be: a trigger by the network side or an active trigger by the UE. The trigger by the network side is that: the network side sends a feedback request to trigger a feedback. The active trigger by the UE is that: a feedback cycle is set and the feedback is triggered when the feedback time arrives; or, a trigger event is set and the feedback is triggered when the trigger event occurs.

The feedback information comprises a service ID, and at least one of the following: a UE status and an area ID.

The UE status comprises at least one of the following: interested in receiving, not interested in receiving, start to receive, stop receiving, receiving bearer change, cell update and cell handover and the like. The area ID comprises: an MBSFN area ID, or a notification indicator. The service ID comprises: a TMGI, and/or an MBMS service ID, and/or a PMCH ID, and/or an LCID, and/or a session ID, and/or a service list index, and/or a service guidance ID or the like. In the above, interested in receiving means that: the UE intends to receive an MBMS service via an MBSFN mode and is monitoring a change notification message on the MCCH; not interested in receiving means that: the UE does not intend to receive the MBMS service via the MBSFN mode and is not monitoring the change notification message on the MCCH.

The feedback information further comprises at least one of the following: a reception capability indicator of the UE and a UE ID.

The reception capability indicator of the UE is used to indicate a capability of the UE in receiving the MBSFN transmission and can be expressed by one bit, and the reception capability indicator information is used to realize a service continuity during the movement of the UE. The UE ID is used to distinguish that same UE sends a same feedback for many times within one feedback cycle. The service guidance ID indicates an MBMS service not started and is used to count the number of UEs that are interested in receiving the service.

The present invention will be further described in details below with reference to drawings and specific embodiments.

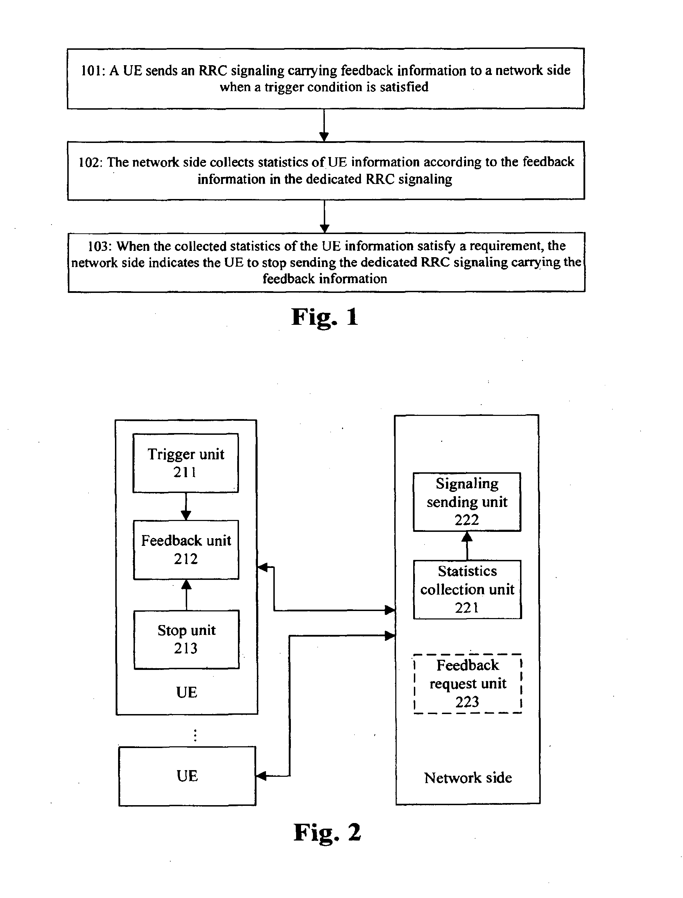

The method for collecting statistics of UE information in an MBMS in an embodiment of the present invention, as shown in Fig. 1, comprises the following steps.

Step 101: A UE sends a dedicated RRC signaling carrying feedback information to a network side when a trigger condition is satisfied.

In this step, the trigger condition can be: a trigger by the network side and/or an active trigger by the UE. The trigger by the network side is that: the network side sends a feedback request to trigger a feedback; the active trigger by the UE is that: a feedback cycle is set and the feedback is triggered when the feedback time arrives; or, a trigger event is set and the feedback is triggered when the trigger event occurs.

The feedback cycle can be selected by the UE itself, or specified by the network side via an RRC message or an MAC message. Preferably, the feedback cycle selected by the UE itself can be one or more MCCH modification cycle or one or more MBMS Service Channel (MCH) scheduling cycle. Preferably, the cycle is generally shorter than a duration of a service session.

The trigger event can be a session start of an MBMS service, a session stop of an MBMS service, a bearer change indication, a cell update, a cell handover or the like.

The step that the network side sends a feedback request can be that: the network side indicates the UE to send the feedback information via an RRC message or an MAC message. Preferably, the RRC message can be an MCCH message or a system message.

The feedback request comprises an MBMS service ID and a probability factor. The MBMS service ID is used to indicate services needing statistics of the UE information, wherein the services are those within the range of one MBSFN area, that is, the statistics of the UE information are collected in a unit of the MBSFN area, and there can be one or more MBMS service IDs. The probability factor is used to indicate the number of UEs that send the feedback information simultaneously, for example, if the probability factor is 0.5, the UEs that receive the service request are valued randomly from 0 to 1 and the UE with a value less than 0.5 sends the feedback information; if the probability factor is 0, it is indicated that the network side requires the UE to stop feeding back; if the probability factor is 1, it is indicated that the number of UEs participating in feedback is not limited.

In the above, within one feedback cycle, after the UE is triggered to feed back once, the UE can send the feedback information continuously according to a trigger event or a feedback request from the network side; that is, within one feedback cycle, the UE can send the feedback information once or multiple times. Preferably, if a UE status does not change within one feedback cycle and the UE only receives the feedback request once, the UE sends the dedicated RRC signaling carrying the feedback information once, and it can send the dedicated RRC signaling carrying feedback information when receiving the feedback request; if the UE status changes within one feedback cycle or the UE receives the feedback request more than once, the UE sends the dedicated RRC signaling carrying the feedback information each time the UE status changes or each time the UE receives the feedback request. The change of a UE reception status comprises at least one of the following: a change from not interested in receiving to interested in receiving, a change from interested in receiving to not interested in receiving, a change from not receive to start to receive, a change from receiving to stop receiving, and a change in a receiving bearer.

In this step, the UE is a UE having an MBMS reception capability. The UE can be in an RRC connected status or an RRC idle status, and it also may be or not be receiving a service. The network side comprises an eNodeB (eNB) and an MBMS Coordination Entity (MCE); wherein the MCE, as a logic entity, can exist independently or exist as a part of other network elements, for example, a part of the eNB. Preferably, the network side also can be a relay or a Home eNodeB (HeNB) or the like.

The dedicated RRC signaling carrying the feedback information is specifically: a new RRC signaling which is created according to an RRC rule to carry the feedback information dedicatedly and is named as MBMSReceptionStatusReport. If the MBMSReceptionStatusReport signaling is sent unsuccessfully, the UE can resend the MBMSReceptionStatusReport signaling or stop sending the MBMSReceptionStatusReport signaling according to an indicator from the network side. The MBMSReceptionStatusReport signaling can be sent via a logical channel, e.g., a Common Control CHannel (CCCH) or a Dedicated Control Channel (DCCH), a default configuration of a physical layer and an MAC layer can be employed, and a transmission mode of Un-acknowledgement Mode (UM) is employed in an RLC layer. The UE should be in the RRC connected status when sending the MBMSReceptionStatusReport signaling, that is, if the UE is in the RRC idle status, the UE needs to enter the RRC connected status before sending the MBMSReceptionStatusReport signaling. The UE first initiates a random access process and sends an RRC connection establishment request, wherein the reason for the RRC connection establishment is set as an MBMS reception, if the RRC connection is established successfully, the UE sends the MBMSReceptionStatusReport signaling via corresponding uplink resources, otherwise, the UE requests for random access again. When the UE is triggered to send the MBMSReceptionStatusReport signaling to the network side according to the trigger condition, if the UE is scheduled, the UE sends the feedback information via existing uplink resources; otherwise, the UE requests for uplink resources via a Scheduling Request (SR) or a Buffer Status Report (BSR) to send the feedback information.

The feedback information comprises a service ID, and at least one of the following: a UE status and an area ID.

The UE status comprises at least one of the following: interested in receiving, not interested in receiving, start to receive, stop receiving, receiving bearer change, cell update and cell handover and the like. The area ID comprises: an MBSFN area ID, or a notification indicator. The service ID comprises: a TMGI, and/or an MBMS service ID, and/or a PMCH ID, and/or an LCID, and/or a session ID, and/or a service list index, and/or a service guidance ID or the like.

The feedback information further comprises at least one of the following: a reception capability indicator of the UE and a UE ID.

Step 102: The network side collects statistics of UE information according to the feedback information in the dedicated RRC signaling.

In this step, the reception of the feedback information is generally completed within a period of time. Preferably, one or more corresponding timers are set, wherein the duration of each timer is generally shorter than the duration of the MBMS session on which the statistics are to be collected. When the UE starts to feed back the feedback information, the timer is started, when the timer turns to 0, the network side stop receiving the feedback information.

The network side collects the statistics of the UE information according to the feedback information in the dedicated RRC signaling, and this step generally comprises: the network side counts the number of UEs in different statuses currently in each service according to the UE status, the area ID and the service ID included in the feedback information in the dedicated RRC signaling.

Preferably, when the trigger condition is that the network side sends a feedback request to trigger feedback, the network side counts the number of UEs in different statuses currently in each service in the MBSFN area according to the probability factor in the sent feedback request.

Within the period of time, if not receiving any feedback information from the UE, the network side will regard that the UE stop receiving or is not interested in receiving the MBMS service. Within the period of time, if receiving a plurality of pieces of same feedback information from the same UE, the network side can collect the statistics once.

Preferably, if the system for the MBMS service also comprises UEs of systems prior to Rel-10, for example, UEs of Rel-9 system, as the UEs of the Rel-9 system have no feedback capability, the number of UEs of all MBMS services in the system can be estimated approximately by determining a scale factor according to the scale of the UEs of Rel-9 system to the UEs of Rel-10 system in the system for the MBMS service.

Step 103: When the collected statistics of the UE information satisfy a requirement, the network side indicates the UE to stop sending the dedicated RRC signaling carrying the feedback information.

Specifically, the network side sends a feedback stop indicator to the UE when the collected statistics of the UE information satisfy a requirement; the UE stops sending the dedicated RRC signaling carrying the feedback information after receiving the feedback stop indicator. Generally, when the counted number of UEs that send the dedicated RRC signaling has reached a preset threshold, or when a reception time of the feedback information ends, the collected statistics of the UE information is considered to satisfy the requirement. The feedback stop indicator can be implemented by creating a new RRC signaling, or using an existing RRC signaling, to carry an identifier indicating the UE to stop sending the dedicated RRC signaling carrying the feedback information.

The existing RRC signaling comprises at least one of the following: an RRC connection setup message, an RRC connection reconfiguration message, an RRC connection re-establishment message, an RRC connection re-establishment rejection message, an RRC connection release message, an RRC connection rejection message, an MCCH message, and an SIB 13 message.

In the embodiment, the requirements for activating or deactivating the MBSFN transmission mode of the MBMS service by the network side are met, simultaneously, the network side can instruct the UE to stop feeding back according to the method, so that the load of the uplink resources can be reduced, and the uplink resources can be saved.

To implement the above method, an embodiment of the present invention provides a system for collecting statistics of UE information in an MBMS, as shown in Fig. 2, comprising: at least one UE and a network side.

The UE is configured to send a dedicated RRC signaling carrying feedback information to the network side according to a trigger condition, and stop sending the dedicated RRC signaling carrying the feedback information after receiving a feedback stop indicator sent by the network side.

In the above, the trigger condition can be: a trigger by the network side and/or an active trigger by the UE. The trigger by the network side is that: the network side sends a feedback request to trigger feedback; and the active trigger by the UE is that: a feedback cycle is set and a feedback is triggered when the feedback time arrives, or a trigger event is set and the feedback is triggered when the trigger event occurs.

The network side is configured to receive the dedicated RRC signaling sent by the UE, collect statistics of UE information according to the feedback information in the dedicated RRC signaling, and send, when the collected statistics of the UE information satisfy a requirement, the feedback stop indicator to the UE.

The UE comprises a trigger unit 211, a feedback unit 212 and a stop unit 213.

The trigger unit 211 is configured to trigger the feedback unit 212 according to the trigger condition.

For example, a feedback cycle is preset, the trigger unit 211 triggers the feedback unit 212 when the feedback time arrives; or, a feedback event is preset, the trigger unit 211 triggers the feedback unit 212 when the feedback event occurs; or, the trigger unit 211 triggers the feedback unit 212 when receiving a feedback request from the network side.

The feedback unit 212 is configured to send the dedicated RRC signaling carrying the feedback information to the network side.

The dedicated RRC signaling carrying the feedback information is specifically: a new RRC signaling which created according to an RRC rule and is used to carry the feedback information dedicatedly.

The feedback information comprises a service ID, and at least one of the following: a UE status and an area ID.

The UE status comprises at least one of the following: interested in receiving, not interested in receiving, start to receive, stop receiving, receiving bearer change, cell update and cell handover and the like. The area ID comprises: an MBSFN area ID, or a notification indicator. The service ID comprises: a TMGI, and/or an MBMS service ID, and/or a PMCH ID, and/or an LCID, and/or a session ID, and/or a service list index, and/or a service guidance ID or the like.

The feedback information further comprises at least one of the following: a reception capability indicator of the UE and a UE ID.

The stop unit 213 is configured to notify, after receiving the feedback stop indicator from the network side, the feedback unit to stop sending the dedicated RRC signaling carrying the feedback information.

Preferably, when the trigger condition is that the network side sends a feedback request to trigger feedback, the trigger unit 211 is further configured to receive the feedback request sent by the network side.

Preferably, the trigger unit 211 is further configured to trigger the feedback unit 212 when detecting that the UE status of the UE, in which the trigger unit 211 is located, changes.

The change of the UE status comprises at least one of the following: a change from not interested in receiving to interested in receiving, a change from interested in receiving to not interested in receiving, a change from not receive to start to receive, a change from receiving to stop receiving, and a change in a receiving bearer.

The network side comprises: a statistics collection unit 221 and a signaling sending unit 222.

The statistics collection unit 221 is configured to receive the dedicated RRC signaling sent by the UE, collect statistics according to the feedback information in the dedicated RRC signaling, and notify the signaling sending unit 222 when the collected statistics of the UE information satisfy a requirement.

The statistics collection unit 221 is specifically configured to count the number of UEs in different statuses currently in each service according to the UE status, the area ID and the service ID included in the feedback information in the dedicated RRC signaling.

The signaling sending unit 222 is configured to send the feedback stop indicator to the UE.

Specifically, the process that the signaling sending unit 222 sends a feedback stop indicator to the UE can be: the signaling sending unit 222 creates a new RRC signaling or utilizes an existing RRC signaling to carry an identifier indicating the UE to stop sending the dedicated RRC signaling, wherein the existing RRC signaling is at least one of the following: an RRC connection setup message, an RRC connection reconfiguration message, an RRC connection re-establishment message, an RRC connection re-establishment rejection message, an RRC connection release message, an RRC connection rejection message, an MCCH message, and an SIB13 message.

Preferably, when the trigger condition is that the network side sends a feedback request to trigger feedback and the UE sends the feedback information according to the feedback request after receiving the feedback request, the network side further comprises a feedback request unit 223 configured to send the feedback request to the UE.

In the solution, the UE sends the dedicated RRC signaling carrying the feedback information to the network side, so that the statistics of the UE information can be collected by the network side. The reception status of each service can be known more accurately according to the result of the statistics, thereby facilitating the adjustment on the transmission mode of services, optimizing the network resource configuration, and improving the service experience of users. Furthermore, when the collected statistics of the UE information satisfy a requirement, the network side can instruct the UE to stop sending the dedicated RRC signaling carrying the feedback information, so that the load of the uplink resources can be reduced, and the uplink resources can be saved.

Above contents are only preferable embodiments of the present invention and are not used for limiting the present invention. Any modifications, equivalent replacements and improvements within the principle of the present invention should be contained within the protection scope of the present invention.

## Claims

1. A method for collecting statistics of User Equipment (UE) information in a Multimedia Broadcast Multicast Service, MBMS, comprising:
a UE sending a dedicated Radio Resource Control, RRC, signaling carrying feedback information to a network side when a trigger condition is satisfied;
**characterized by**
the network side collecting statistics of UE information according to the feedback information in the dedicated RRC signaling, and sending, when the collected statistics of the UE information satisfy a requirement, a feedback stop indicator to the UE; and
the UE stopping sending the feedback information after receiving the feedback stop indicator
wherein the feedback information comprises a service identification, at least one of the following: a UE status and an area ID;
wherein the service identification comprises: a Temporary Mobile Group Identity, TMGI, and/or an MBMS service ID, and/or a Physical Multicast Channel, PMCH, ID and/or a Logic Channel Identification, LCID, and/or a session ID, and/or a service list index, and/or a service guidance ID.

2. The method according to claim 1, **characterized in that** the trigger condition comprises: a trigger by the network side and/or an active trigger by the UE, wherein
the trigger by the network side is that: the network side sends a feedback request to trigger a feedback;
the active trigger by the UE is that: a feedback cycle is set and the feedback is triggered when the feedback time arrives; or, a trigger event is set and the feedback is triggered when the trigger event occurs.

3. The method according to claim 1, **characterized in that** the dedicated RRC signaling carrying the feedback information comprises a new RRC signaling which is created according to an RRC rule and is used to carry the feedback information dedicatedly.

4. The method according to any one of claims 1 to 3, **characterized in that** the UE status comprises at least one of the following: interested in receiving, not interested in receiving, start to receive, stop receiving, receiving bearer change, cell update and cell handover;
the area ID comprises: a Multicast Broadcast Single Frequency Network, MBSFN, area ID, or a notification indicator.

5. The method according to claim 1, **characterized in that** the feedback stop indicator is implemented by creating a new RRC signaling, or using an existing RRC signaling, to carry an identifier indicating the UE to stop sending the dedicated RRC signaling carrying the feedback information.

6. The method according to claim 5, **characterized in that** the existing RRC signaling comprises at least one of the following: an RRC connection setup message, an RRC connection reconfiguration message, an RRC connection re-establishment message, an RRC connection re-establishment rejection message, an RRC connection release message, an RRC connection rejection message, an MBMS point-to-multipoint Control CHannel, MCCH, message, and a System Information Block 13, SIB13, message.

7. The method according to claim 1, **characterized in that** the step of the UE sending the dedicated RRC signaling carrying the feedback information to the network side comprises:
if the UE status does not change within one feedback cycle and a feedback request is received only once, the UE sending the dedicated RRC signaling carrying the feedback information once;
if the UE status changes within one feedback cycle or the feedback request is received more than once, the UE sending the dedicated RRC signaling carrying the feedback information each time the UE status changes or each time the UE receives the feedback request.

8. The method according to claim 7, **characterized in that** a change of the UE status comprises at least one of the following: a change from not interested in receiving to interested in receiving, a change from interested in receiving to not interested in receiving, a change from not receive to start to receive, a change from receiving to stop receiving, and a change in a receiving bearer.

9. A system for collecting statistics of User Equipment (UE) information in a Multimedia Broadcast Multicast Service, MBMS, comprising: a UE and a network side; wherein
the UE is configured to send a dedicated Radio Resource Control, RRC, signaling carrying feedback information to the network side according to a trigger condition, **characterized by** stop sending the dedicated RRC signaling carrying the feedback information after receiving a feedback stop indicator sent by the network side;
the network side is configured to receive the dedicated RRC signaling sent by the UE, collect statistics of UE information according to the feedback information in the dedicated RRC signaling, and send, when the collected statistics of the UE information satisfy a requirement, the feedback stop indicator to the UE;
wherein the feedback information comprises a service identification, and at least one of the following: a UE status and an area ID;
wherein the service identification comprises: a Temporary Mobile Group Identity, TMGI, and/or an MBMS service ID, and/or a Physical Multicast Channel, PMCH, ID and/or a Logic Channel Identification, LCID, and/or a session ID, and/or a service list index, and/or a service guidance ID

10. The system according to claim 9, **characterized in that**
the UE comprises a trigger unit, a feedback unit and a stop unit, wherein
the trigger unit is configured to trigger the feedback unit according to the trigger condition;
the feedback unit is configured to send the dedicated RRC signaling carrying the feedback information to the network side;
the stop unit is configured to notify, after receiving the feedback stop indicator from the network side, the feedback unit to stop sending the dedicated RRC signaling carrying the feedback information;
the network side comprises: a statistics collection unit and a signaling sending unit, wherein
the statistics collection unit is configured to receive the dedicated RRC signaling sent by the UE, collect the statistics according to the feedback information in the dedicated RRC signaling, and notify the signaling sending unit when the collected statistics of the UE information satisfy the requirement;
the signaling sending unit is configured to send the feedback stop indicator to the UE.

11. The system according to claim 10, **characterized in that** when the trigger condition is that the network side sends a feedback request to trigger a feedback, the network side further comprises a feedback request unit configured to send the feedback request to the UE;
correspondingly, the trigger unit is further configured to receive the feedback request sent by the network side.

12. The system according to any one of claims 9 to 11, **characterized in that** the statistics collection unit is specifically configured to count the number of UEs in different statuses currently in each service according to the UE status, the area ID and the service identification included in the feedback information in the dedicated RRC signaling, wherein
the UE status comprises at least one of the following: interested in receiving, not interested in receiving, start to receive, stop receiving, receiving bearer change, cell update and cell handover;
the area ID comprises: a Multicast Broadcast Single Frequency Network, MBSFN, area ID, or a notification indicator;

13. The system according to claim 10, **characterized in that** the trigger unit is further configured to trigger the feedback unit when detecting that a UE status of the UE, in which the trigger unit is located, changes; wherein
a change of the UE status comprises at least one of the following: a change from not interested in receiving to interested in receiving, a change from interested in receiving to not interested in receiving, a change from not receive to start to receive, a change from receiving to stop receiving, and a change in a receiving bearer.

## Patentansprüche

1. Verfahren zum Sammeln von Statistik über Benutzergeräteinformation (UE=User Equipment)-Information in einem MBMS (Multi Media Broadcast Multicast Service), mit:
einem Benutzergerät (UE), das eine bestimmte RRC (Radio Resource Control)-Signalsierung, die Feedback-Information trägt, an eine Netzwerkseite sendet, wenn eine Auslösebedingung erfüllt ist; **dadurch gekennzeichnet, dass**
die Netzwerkseite eine Statistik der UE-Information gemäß der Feedback-Information in der bestimmten RRC-Signalisierung sammelt und, wenn die gesammelte Statistik der UE-Information eine Anforderung erfüllen, ein Feedbackstoppindikator an das Benutzergerät (UE) gesendet wird; und
das Benutzergerät das Senden der Feedbackinformation anhält nach einem Empfang des Feedbackstoppindikators,
wobei die Feedbackinformation eine Serviceidentifikation aufweist und von Folgendem mindestens eines:
einen UE-Status und eine Bereichs-ID;
wobei die Serviceidentifikation aufweist: eine Temporary Mobile Group Identity TMGI und/oder eine MBMS-Service-ID, und/oder einen Physical Multicast Channel PMCH-ID und/oder eine Logic Channel Identification LCID und/oder eine Session-ID, und/oder einen Service-List-Index, und/oder eine Service-Guidance-ID.

2. Verfahren nach Anspruch 1, **dadurch gekennzeichnet, dass** die Auslösebedingung aufweist: eine Auslösung durch die Netzwerkseite und/oder eine aktive Auslösung durch das UE, wobei
der Auslöser durch die Netzwerkseite ist: die Netzwerkseite sendet eine Feedbackanforderung zum Auslösen eines Feedbacks;
der aktive Auslöser durch das UE ist: ein Feedbackzyklus wird gesetzt und der Feedback wird ausgelöst, wenn die Feedbackzeit eintritt; oder ein Auslöseereignis wird festgelegt und der Feedback wird ausgelöst, wenn das Auslöseereignis auftritt.

3. Verfahren nach Anspruch 1, **dadurch gekennzeichnet, dass** die bestimmte RRC-Signalisierung, die die Feedbackinformation trägt, eine neue RRC-Signalisierung aufweist, die erzeugt wird gemäß einer RRC-Regel, und die verwendet wird zum dedizierten Tragen der Feedbackinformation.

4. Verfahren nach einem der Ansprüche 1 bis 3, **dadurch gekennzeichnet, dass** der UE-Status von Folgendem mindestens eines aufweist: interessiert in Empfangen, nicht interessiert in Empfangen, Start des Empfangens, Stopp des Empfangens, Empfangen einer Trägeränderung, eines Zellenupdates und Zellen-Handovers;
die Bereichs-ID aufweist: ein Multicast Broadcast Single Frequency Network MBSFN-Bereichs-ID oder einen Benachuchtigungsindikator.

5. Verfahren nach Anspruch 1, **dadurch gekennzeichnet, dass** der Feedbackstoppindikator implementiert ist durch Erzeugen einer neuen RRC-Signalisierung, oder durch Verwenden einer existierenden RRC-Signalisierung, um einen Identifizierer zu tragen, der das UE anweist, das Senden der bestimmten RRC-Signalisierung, die die Feedbackinformation trägt, zu stoppen.

6. Verfahren nach Anspruch 5, **dadurch gekennzeichnet, dass** die existierende RRC-Signalisierung von Folgendem mindestens eines aufweist: eine RRC-Verbindungs-Setup-Nachricht, eine RRC-Verbindungs-Rekonfigurierungsnachricht, eine RRC-Verbindungsneuaufbaunachricht, eine RRC-Verbindungsneuaufbauablehnungsnachricht, eine RRC-Verbindungsfreigabenachricht, eine RRC-Verbindungsablehnungsnachricht, eine MBMS-Point-to-Multipoint-Control CHannel MCCH-Nachricht, und eine Systemidentifikationsblock 13 SIB 13-Nachricht.

7. Verfahren nach Anspruch 1, **dadurch gekennzeichnet, dass** der Schritt des UE-Sendens der bestimmten RRC-Signalisierung, die die Feedbackinformation trägt, an die Netzwerkseite aufweist:
wenn der UE-Status sich nicht innerhalb eines Feedbackzyklus ändert, und die Feedbackanfrage nur einmal empfangen wird, das UE die bestimmte RRC-Signalisierung, die die Feedbackinformation trägt, einmal sendet;
wenn sich der UE-Status innerhalb eines Feedback-Zyklus ändert, oder die FeedbackAnfrage mehr als einmal empfangen wird, das UE die bestimmte RRC-Signalisierung, die die Feedbackinformation trägt, jedes Mal sendet, wenn sich der UE-Status ändert, oder jedes Mal, wenn das UE die Feedbackanfrage empfängt.

8. Verfahren nach Anspruch 7, **dadurch gekennzeichnet, dass** eine Änderung des UE-Status von Folgendem mindestens eines aufweist: eine Änderung von nicht interessiert in das Empfangen zu interessiert in Empfangen, eine Änderung von interessiert in Empfangen zu nicht interessiert in Empfangen, eine Änderung von nicht Empfangen in Start des Empfangens, eine Änderung von Empfangen in Stopp des Empfangens, und eine Änderung in einem Empfangen des Trägers.

9. System zum Sammeln von Statistik einer Benutzergeräteinformation (UE=User Equipment)-Infoimation in eine Multimedia Broadcast Multicast Service MBMS, mit:
einem Benutzergerät UE und einer Netzwerkseite; wobei
das UE konfiguriert ist zum Senden einer bestimmten Radio Resource Control RRC-Signalisierung, die Feedbackinformation trägt, an die Netzwerkseite gemäß einer Auslösebedingung, **gekennzeichnet durch** ein Stoppen des Sendens der bestimmten RRC-Signalisierung, die die Feedbackinformation trägt, nach einem Empfangen eines Feedbackstoppindikators, der von der Netzwerkseite gesendet worden ist;
die Netzwerkseite konfiguriert ist zum Empfangen der bestimmten RRC-Signalisierung, die von dem UE gesendet worden ist, zum Sammeln von Statistik der UE-Information gemäß der Feedbackinformation in der bestimmten RRC-Signalisierung, und wenn die gesammelte Statistik der UE-Information eine Anforderung erfüllen, Senden des Feedbackstoppindikators an das UE;
wobei die Feedbackinformation eine Serviceidentifikation und von Folgendem mindestens eines aufweist: einen UE-Status und eine Bereichs-ID;
wobei die Service-Identifikation aufweist: eine Temporary Mobile Group Identity TMGI und/oder eine MBMS-Service-ID und/oder eine Physical Multicast Channel PMCH-ID und/oder eine Logic Channel Identification LCID und/oder eine Session-ID und/oder einen Service-Listen-Index und/oder eine Service Guidance-ID.

10. System nach Anspruch 9, **dadurch gekennzeichnet, dass**
das UE eine Triggereinheit, eine Feedbackeinheit und eine Stoppeinheit aufweist, wobei
die Triggereinheit konfiguriert ist zum Auslösen der Feedbackeinheit gemäß der Auslösebedingung;
die Feedbackeinheit konfiguriert ist zum Senden der bestimmten RRC-Signalisierung, die die Feedbackinformation trägt, an die Netzwerkseite;
die Stoppeinheit konfiguriert ist, um nach Empfang des Feedbackstoppindikators von der Netzwerkseite der Feedbackeinheit mitzuteilen, das Senden der bestimmten RRC-Signalisierung, die die Feedbackinformation trägt, zu stoppen;
die Netzwerkseite aufweist: eine Statistiksammeleinheit und eine Signalsierungssendeeinheit, wobei
die Statistiksammeleinheit konfiguriert ist zum Empfangen der bestimmten RRC-Signalisierung, die von dem UE gesendet worden ist, zum Sammeln der Statistik gemäß der Feedbackinformation in der bestimmten RRC-Signalisierung, und Benachrichtigen der Signalsierungssendeeinheit, wenn die gesammelte Statistik der UE-Information das Erfordernis erfüllt;
die Signalsierungssendeeinheit konfiguriert ist zum Senden des Feedbackstoppindikators an das UE.

11. System nach Anspruch 10, **dadurch gekennzeichnet, dass** wenn die Auslösebedingung ist, dass die die Netzwerkseite eine Feedbackanforderung zum Auslösen eines Feedbacks sendet, die Netzwerkseite ferner eine Feedbackanfrageeinheit aufweist, die konfiguriert ist zum Senden der Feedbackanfrage an das UE;
entsprechend ist die Triggereinheit ferner konfiguriert zum Empfangen der Feedbackanfrage, die von der Netzwerkseite gesendet worden ist.

12. System nach einem der Ansprüche 9 bis 11, **dadurch gekennzeichnet, dass** die Statistiksammeleinheit speziell konfiguriert ist zum Zählen der Anzahl an UEs in unterschiedlichen momentanen Zuständen in jedem Service gemäß dem UE-Status, der Bereichs-ID und der Service-Identifikation, die in der Feedbackinformation in der bestimmten RRC-Signalisierung enthalten sind, wobei
der UE-Status von Folgendem mindestens eines aufweist: interessiert in Empfangen, nicht interessiert in Empfangen, Start des Empfangens, Stopp des Empfangens, Empfangen einer Trägeränderung, eines Zellenupdates und Zellen-Handovers;
die Bereichs-ID aufweist:
eine Multicast Broadcast Single Frequency Network MBSFN-Bereichs-ID oder einen Benachuchtigungsindikator.

13. System nach Anspruch 10, **dadurch gekennzeichnet, dass** die Triggereinheit ferner konfiguriert ist zum Auslösen der Feedbackeinheit, wenn detektiert wird, dass sich ein UE-Status des UE, in dem sich die Triggereinheit befindet, geändert hat; wobei
eine Änderung des UE-Status von Folgendem mindestens eines aufweist: eine Änderung von nicht interessiert in Empfangen zu interessiert in Empfangen, eine Änderung von interessiert in Empfangen zu nicht interessiert in Empfangen, eine Änderung von nicht Empfangen zu Start des Empfangens, eine Änderung von Empfangen zu Stopp des Empfangens, und eine Änderung in einem Empfangen des Trägers.

## Revendications

1. Procédé de collecte de statistiques d'informations d'équipement d'utilisateur (UE) dans un service de diffusion groupée multimédia, MBMS, comprenant :
un UE envoyant une signalisation de commande de ressource radio dédiée, RRC, portant une information de retour à un côté réseau quand une condition de déclenchement est vérifiée ;
**caractérisé par** :
le côté réseau collectant des statistiques d'information d'équipement d'utilisateur selon l'information en retour dans la signalisation RRC dédiée, et envoyant, quand les statistiques collectées de l'information d'UE satisfont une condition, un indicateur d'arrêt de retour à l'UE ; et
l'UE arrêtant l'envoi de l'information en retour après avoir reçu l'indicateur d'arrêt de retour ;
dans lequel l'information en retour comprend une identification de service et au moins l'un des éléments suivants : un statut d'UE et une identification de zone ;
dans lequel l'identification de service comprend : une identité de groupe mobile temporaire, TMGI, et/ou une identification de service MBMS, et/ou une identification de canal de diffusion groupée physique, PMCH, et/ou une identification de canal logique, LCID, et/ou une identification de session, et/ou un index de liste de services et/ou une identification de guidage de service.

2. Procédé selon la revendication 1, **caractérisé en ce que** la condition de déclenchement comprend : un déclenchement par le côté réseau et/ou un déclenchement actif par l'UE, dans lequel :
le déclenchement par le côté réseau est le suivant : le côté réseau envoie une demande de retour pour déclencher un retour ;
le déclenchement actif par l'UE est le suivant : un cycle de retour est établi et le retour est déclenché quand arrive le temps de retour ; ou un événement de déclenchement est établi et le retour est déclenché quand l'événement de déclenchement se produit.

3. Procédé selon la revendication 1, **caractérisé en ce que** la signalisation RRC dédiée portant l'information de retour comprend une nouvelle signalisation RRC qui est créée selon une règle RRC et qui est utilisée pour porter l'information de retour de façon dédiée.

4. Procédé selon l'une quelconque des revendications 1 à 3, **caractérisé en ce que** le statut d'UE comprend au moins l'un des éléments suivants : intéressé pour recevoir, non intéressé pour recevoir, commencer à recevoir, arrêter la réception, changement de support de réception, mise à jour de cellule et transfert intercellulaire ;
l'identification de zone comprend : une identification de zone de réseau monofréquence de diffusion groupée, MBSFN, ou un indicateur de notification.

5. Procédé selon la revendication 1, **caractérisé en ce que** l'indicateur d'arrêt de retour est mis en oeuvre en créant une nouvelle signalisation RRC, ou en utilisant une signalisation RRC existante, pour porter un identificateur qui indique à l'UE d'arrêter d'envoyer la signalisation RRC dédiée qui porte l'information de retour.

6. Procédé selon la revendication 5, **caractérisé en ce que** la signalisation RRC existante comprend au moins l'un des éléments suivants : un message d'établissement de connexion RRC, un message de reconfiguration de connexion RRC, un message de rétablissement de connexion RRC, un message de rejet de rétablissement de connexion RRC, un message de libération de connexion RRC, un message de rejet de connexion RRC, un message de canal de commande point à multipoint de MBMS, MCCH, et un message de bloc 13 d'information de système, SIB 13.

7. Procédé selon la revendication 1, **caractérisé en ce que** l'étape dans laquelle l'UE envoie la signalisation RRC dédiée portant l'information de retour au côté réseau comprend :
si le statut d'UE ne change pas au cours d'un cycle de retour et si une demande de retour n'est reçue qu'une fois, l'UE envoie la signalisation RRC dédiée portant l'information de retour une fois ;
si le statut d'UE change au cours d'un cycle de retour ou si la demande de retour est reçue plus d'une fois, l'UE envoie la signalisation RRC dédiée portant l'information de retour à chaque fois que le statut d'UE change ou à chaque fois que l'UE reçoit la demande de retour.

8. Procédé selon la revendication 7, **caractérisé en ce qu'**un changement du statut d'UE comprend au moins l'un des éléments suivants : un passage de non intéressé pour recevoir à intéressé pour recevoir, un passage d'intéressé pour recevoir à non intéressé pour recevoir, un passage de non réception à commencer à recevoir, un passage de réception à arrêter la réception, et un changement de support de réception.

9. Système pour collecter des statistiques d'informations d'équipement d'utilisateur (UE) dans un service de diffusion groupée multimédia, MBMS, comprenant : un UE et un côté réseau ; dans lequel
l'UE est configuré pour envoyer une signalisation de commande de ressource radio dédiée, RRC, portant une information de retour à un côté réseau selon une condition de déclenchement, **caractérisé par** l'arrêt de l'envoi de la signalisation RRC dédiée portant l'information de retour après la réception d'un indicateur d'arrêt de retour envoyé par le côté réseau ;
le côté réseau est configuré pour recevoir la signalisation RRC dédiée envoyée par l'UE, collecter des statistiques d'information d'UE selon l'information en retour dans la signalisation RRC dédiée, et envoyer, quand les statistiques collectées de l'information d'UE satisfont une condition, l'indicateur d'arrêt de retour à l'UE ;
dans lequel l'information en retour comprend une identification de service et au moins l'un des éléments suivants : un statut d'UE et une identification de zone ;
dans lequel l'identification de service comprend : une identité de groupe mobile temporaire, TMGI, et/ou une identification de service MBMS, et/ou une identification de canal de diffusion groupée physique, PMCH, et/ou une identification de canal logique, LCID, et/ou une identification de session, et/ou un index de liste de services et/ou une identification de guidage de service.

10. Système selon la revendication 9, **caractérisé en ce que** :
l'UE comprend une unité de déclenchement, une unité de retour et une unité d'arrêt, dans lequel
l'unité de déclenchement est configurée pour déclencher l'unité de retour selon la condition de déclenchement ;
l'unité de retour est configurée pour envoyer la signalisation RRC dédiée portant l'information de retour au côté réseau ;
l'unité d'arrêt est configurée pour notifier, après avoir reçu l'indicateur d'arrêt de retour du côté réseau, à l'unité de retour d'arrêter d'envoyer la signalisation RRC dédiée portant l'information de retour ;
le côté réseau comprend : une unité de collecte de statistiques et une unité d'envoi de signalisation, dans lequel
l'unité de collecte de statistiques est configurée pour recevoir la signalisation RRC dédiée envoyée par l'UE, collecter les statistiques selon l'information de retour présente dans la signalisation RRC dédiée, et notifier à l'unité d'envoi de signalisation quand les statistiques collectées de l'information d'UE satisfont la condition ;
l'unité d'envoi de signalisation est configurée pour envoyer l'indicateur d'arrêt de retour à l'UE.

11. Système selon la revendication 10, **caractérisé en ce que**, lorsque la condition de déclenchement est que le côté réseau envoie une demande de retour pour déclencher un retour, le côté réseau comprend en outre une unité de demande de retour configurée pour envoyer la demande de retour à l'UE ;
de même, l'unité de déclenchement est en outre configurée pour recevoir la demande de retour envoyée par le côté réseau.

12. Système selon l'une quelconque des revendications 9 à 11, **caractérisé en ce que** l'unité de collecte de statistiques est spécialement configurée pour compter le nombre d'UE dans des statuts différents simultanément dans chaque service selon le statut d'UE, l'identification de zone et l'identification de service compris dans l'information de retour présente dans la signalisation RRC dédiée, dans lequel
le statut d'UE comprend au moins l'un des éléments suivants : intéressé pour recevoir, non intéressé pour recevoir, commencer à recevoir, arrêter la réception, changement de support de réception, mise à jour de cellule et transfert intercellulaire ;
l'identification de zone comprend : une identification de zone de réseau monofréquence de diffusion groupée, MBSFN, ou un indicateur de notification.

13. Système selon la revendication 10, **caractérisé en ce que** l'unité de déclenchement est en outre configurée pour déclencher l'unité de retour quand il est détecté qu'un statut d'UE de l'UE dans lequel se trouve l'unité de déclenchement change ; dans lequel
un changement du statut d'UE comprend au moins l'un des éléments suivants : un passage de non intéressé pour recevoir à intéressé pour recevoir, un passage d'intéressé pour recevoir à non intéressé pour recevoir, un passage de non réception à commencer à recevoir, un passage de réception à arrêter la réception, et un changement de support de réception.
